# EUROPEAN PATENT APPLICATION

(11) **EP 1 635 010 A1**
(43) Date of publication of application: **15.03.2006**
(21) Application number: 04733001.4
(22) Date of filing: 14.05.2004
(51) Int. Cl.: E04G 9/05

(54) **COMPOSITE PANEL FOR USE IN CONCRETE FORMWORK AND PRODUCTION METHOD THEREOF**

(30) Priority: 17.06.2003 ES 200301413 P
(71) Applicant: ULMA C y E, S. COOP., 20560 Onate (Guipuzcoa) (ES)
(72) Inventor: AROCENA BERGARECHE, Alberto, E-20560 ONATI (Guipuzcoa) (ES); FABIAN MARIEZCURRENA, Aitor, E-20560 ONATI (Guipuzcoa) (ES)
(74) Representative: Carpintero Lopez, Francisco
(86) International application number: PCT/ES2004/000216
(87) International publication number: WO 2004/111368

(57) **Abstract**

The present invention relates to a composite panel for application in concrete shuttering which incorporates a core which contains recycled thermoplastic material and triturated recycled rubber, preferably recycled polypropylene in a quantity of 80-20% and recycled rubber in a quantity of 20-80%, or recycled material coming from the automobile industry which contains triturated recycled thermoplastic material and rubber in a quantity of 90-40%, and a quantity of recycled polypropylene of 10-60%. On at least one of the two faces of the core a structural skin is laid with intermediation of a filter which acts as interface and allows a secure bonding of said structural skin to the core. In turn, on one of the faces of the structural skin, a finishing skin is laid which constitutes the contact face with the concrete.

## Description

### FIELD OF THE INVENTION

The present invention relates to the field of the panels used in shuttering in the construction sector. More specifically to panels of composite type plastic material for application in concrete shuttering. In particular, the invention relates to composite panels for concrete shuttering which incorporate a core based on recycled material.

### BACKGROUND OF THE INVENTION

At the present time, concrete shuttering is implemented with phenolic wooden panels coupled on a metallic supporting frame which gives rigidity and strength to the structure. Said assemblies are mounted in the works and give form to the shuttering it is sought to produce.

In the case of vertical shuttering use is made of a birch-fir multi-layer panel usually obtained from Finland. For horizontal shuttering a panel of Central European fir or Monterey pine is habitually used which consists of three layers, with the two outer layers oriented in one direction and the middle layer oriented perpendicularly to the outer ones.

Wood presents a fundamental problem which consists in that when in contact with wet surroundings, as is the case of concrete which is being poured and comes into contact with the former, it swells and the dimensions increase, for which reason the adaptation to the frame is not correct and these areas are marked on the concrete when it has set, which is not admitted by the architect on many jobs.

Moreover, the pouring of concrete causes damage to the wood of the peeling, scoring and other types, for which reason frequent repair of said panels becomes necessary when dismantled from the works, which involves investing a good number of hours in repairs.

Furthermore, there is the additional problem that the weight of the shuttering structure is excessive, whereby its reduction would be convenient to facilitate the transport of said panels.

It is pointed out that at the present time new products are appearing in the European market which avoid the drawbacks arising from the use of wooden panels such as multi-layer and triple-layered panels clad with plastic sheets for protection from dampness. Another product is the ALKUS platte A47 which consists of a polypropylene sandwich with aluminium and plastic skins which has the following drawbacks: a) instability with the changes in temperature; b) chemical attacks of the alkalis on the aluminium, c) the dimensions of the panels do not cover the total surface necessary for the structure of the shuttering panel.

In the case of scaffolding platforms, a sandwich type structure has appeared on the market with two layers of aluminium and a honeycomb core of aluminium.

In the American patent application US 2002/0187293 a shuttering element and a process for manufacture and repair of shuttering elements are described, constituted by a carrier panel covered on at least one of its faces by a film which is bonded to the carrier panel in a replaceable fashion by means of an adhesive agent which is disabled by the influence of heat. The core of the shuttering element is of synthetic material which is not sufficiently rigid and has to be reinforced by means of a layer of reinforcing fibres, which implies an increase in costs.

The composite panel for application in concrete shuttering of the present invention intends to overcome the aforementioned drawbacks by including in the core materials obtained from recycling which provide it with sufficient rigidity. Thus, in addition to achieving a panel with the mechanical properties required for the application of the same in concrete shuttering, it is possible to reduce costs and at the same time take advantage of waste materials. Said last aspect is fundamental nowadays in that it is necessary to recycle and reuse waste materials to avoid deterioration in the environment and, moreover, to save raw materials and energy.

More specifically, the inclusion in the core of recycled rubber signifies substantial advantages, not only by reducing the weight of the panel, but also by conferring better mechanical properties upon it, particularly as regards nailing.

### OBJECT OF THE INVENTION

An object of the invention is a composite panel for application in concrete shuttering, the core of which is essentially constituted by recycled material, more specifically, by recycled thermoplastic material and triturated recycled rubber or by triturated recycled material, obtained from the automobile industry which contains thermoplastic and triturated rubber material, and recycled thermoplastic material such as recycled polypropylene.

Another object of the invention is a procedure for the production of said composite panel for application in concrete shuttering from recycled thermoplastics and rubber which takes place in accordance with stages of mixing and hot-pressing or extrusion.

### DETAILED DESCRIPTION OF THE INVENTION

The present invention relates to a composite panel for application in concrete shuttering essentially characterized in that it incorporates a core which contains the following components:
- recycled thermoplastic material,
- triturated recycled rubber.

The composite panel for application in concrete shuttering which constitutes the object of this invention has a structure of the sandwich type and is constituted essentially in its core by thermoplastic material and rubber obtained from conveniently triturated and mixed waste.

The recycled thermoplastic material can be acrylonitrile butadiene styrene (ABS), a phenol resin of the novolac type, polypropylene, etc. This thermoplastic material acts as a "binder" when fusion takes place at 160-200° C (specific melting temperature).

In a particular embodiment of the invention, said recycled thermoplastic material is, preferably, polypropylene, in powder or granular form.

In another particular embodiment, the triturated recycled rubber has a grain size of 1-4 mm.

In another preferred embodiment of the invention, the recycled polypropylene is in a quantity of between 80 and 20%, being preferably 70%; and the triturated recycled rubber is in a quantity of between 20 and 80%, being preferably 30%.

In addition, the invention also refers to a composite panel for application in concrete shuttering which incorporates a core which contains the following components:
- triturated recycled material obtained from the automobile industry which contains thermoplastic material and triturated rubber;
- recycled thermoplastic material, such as recycled polypropylene.

In addition, in another preferred embodiment of the invention, said triturated recycled material is in a quantity of between 90 and 40%, preferably 70%; while the recycled polypropylene is in a quantity of between 10 and 60%, preferably 30%.

Therefore, two possible preferred compositions of the core of the panel are envisioned:
- Recycled polypropylene and recycled rubber. The percentages vary between 80 and 20% recycled polypropylene and between 20 and 80% rubber, preferred percentages for optimum use being 70% polypropylene and 30% rubber.
- Recycled material and recycled polypropylene. This concerns a recycled material obtained from the automobile industry which contains thermoplastic material and rubber, the distribution being recycled material in a percentage from 90 to 40% whilst the percentage of recycled polypropylene varies between 10 and 60%, the optimum percentages being 70% recycled material and 30% polypropylene.

In both cases the use of rubber is contemplated in the production of cores in an optimum percentage which avoids decreasing the rigidity of the panel and favours the nailing and better recovery of the hole after extraction of the nail or screw which joins it to the frame due to its expansion and recovery properties. The incorporation of this type of rubber contributes to a reduction in the cost of the product. In addition, in the event of impact rubber constitutes an essential element in absorbing the energy.

Since the core is fabricated with recycled material, a material is being used which in principle has no type of industrial application, which determines that said core is obtained at low cost which greatly reduces the final price of the panel.

On the core based on recycled material described above a structural skin is laid on at least one of the two faces of the core with intermediation of a filter which acts as interface and which allows a secure bonding of said structural skin to the core.

Said structural skin, which provides strength and rigidity to the panel, consists of a sheet of 1 to 3 mm in thickness which can be laid on one or the two faces of the core and the nature of which can be polymeric (thermoplastic or thermostable), wood or hybrids thereof. The appropriate material for said structural skin is thermostable in nature such as a polyester reinforced with bidirectional fabric of fibreglass and cut fibre with a grammage of 500-3500 g/m²; an impregnated SMC of hybrid fabric formed by a layer of fibreglass cloth of 400 g/m² and of bidirectional fabric with the same grammage impregnated in a polyester resin (orthophthalic, isophthalic or vinylic); or reinforced polypropylene.

In a particular embodiment, said structural skin is constituted by reinforced polypropylene, for example of the TWINTEX or GMTEX trademark.

The filter which acts as interface between the core and the structural skin consists of a physical base which favours adhesion between these two parts of the sandwich panel to be manufactured and matches insofar as possible the different nature between the thermoplastic material of the core and the thermostable material in the structural skin.

In a particular embodiment of the invention, said filter is a filter of continuous threads or single-threaded with a grammage of 400-800 g/m² or a bidirectional fabric with a grammage of 500-800 g/m²; preferably a filter of continuous threads with a grammage of 400-800 g/m².

To achieve adequate mechanical properties of the panel for concrete shuttering it is fundamental that there be perfect adherence between the core and the structural skin. Poor adhesion will result in peeling problems, as well as in a strength less than that required. To this end, it is necessary that total impregnation does not take place of the fibre which acts as interface on the part of the thermoplastic material of the core, since this will make the subsequent adhesion of the thermostable skin exceedingly difficult. Should this total impregnation take place, the surface of said interface has to be treated mechanically (by means of sanding, for example) for the purpose of improving contact between the core and the skin.

On one of the faces of the structural skin a finishing skin is laid which constitutes the contact surface with the concrete, thereby conforming the composite panel for application in concrete shuttering of the invention.

Said finishing skin must offer optimum properties of resistance to abrasion and scoring, resistance to impact and chemical aggression (in an alkaline environment like concrete and to other aggressive chemical products such as the form-stripping agents habitually used). Said finishing skin is adhered to one of the faces of the structural skin by means of an adhesive and it can be replaced when it deteriorates, without having to change the whole panel.

In a particular embodiment, the finishing skin is constituted by CURV (polypropylene reinforced with bidirectional polypropylene fabric) or by polyurethane or polyethylene; its thickness being between 0.2 and 0.7 mm.

The manufacturing process of composite panels for application in concrete shuttering proceeds according to the following stages:
- mixing of the components of the core, be they recycled polypropylene + rubber or recycled material + polypropylene in a mixer to obtain proper uniformity,
- hot-pressing of the core and of the added layers consisting of the single-threaded type of thread filter, the structural skin, the adhesive film, and the finishing skin.

In a variant of the second phase described above, it is contemplated that instead of carrying out hot-pressing, the material constituting the core be extruded for its subsequent passage through a calender wherein the different layers are superimposed: single-threaded filter, structural skin, adhesive film and finishing skin.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:

Figure 1. - It shows a schematic view of the elements which intervene in the process of manufacturing the composite panel for application in concrete shuttering during the phases of mixing and hot-pressing of the core, reinforcing layer and structural skin.

### PREFERRED EMBODIMENT OF THE INVENTION

In the light of the aforesaid figure, it is observed that the procedure for obtaining the composite panel for application in concrete shuttering proceeds according to a first stage of mixing and blending in a mixer (1) the triturated rubber (2), polypropylene (3) and additives (4) which will form the core (5) of the panel.

Next the core (5) is directed toward a sector prior to a press (6) in which corresponding layers of reinforcing fibres (7) are applied on both faces of the core (5).

Subsequently on the assembly formed by the core (5) and the reinforcing layers of fibres (7) two layers of structural skin (8) are applied which previously pass through corresponding calender rollers (9) wherein they are warmed to 170° C.

Next, on one of the faces of the structural skin (8), an adhesive is applied and the finishing skin, not represented, and the assembly so constituted passes through the hot-press (6) resulting in the forming of the panel.

### EXAMPLE OF APPLICATION OF THE INVENTION

Hereunder trials are described which were carried out with a number of panels which in their core comprise a thermoplastic material combined with triturated rubber obtained from recycling in different percentages, the mechanical properties which are shown in the table being obtained in each case.

The intention is to make panels for concrete shuttering using a mould of 1200 x 900 mm maximum dimensions by pressing the different panels in a 325 Tm press with parallelism control with a pressure of 205 bar and temperature of 180° C during 30 minutes.

The compositions used for the production of the cores were the following:
1. - Core of 60% recycled polypropylene and 40% recycled rubber
2. - Core of 60% recycled ABS and 40% recycled rubber
3. - Core of 70% recycled material and 30% recycled rubber.

When the cores were produced, the skins were laid using a single-threaded fibre of 850 g/m² as core-skin structural interface:
- in the first two cases a structural skin of impregnated fabric was used with vinyl ester resin, and a finishing skin of commercial polyester SMC with nanoparticles to improve its resistance to abrasion;
- in the third case a structural skin of Twintex and a finishing skin of Curv were used.

The bonding between the different cores and skins was carried out by hot-compressing at 80 bar during 7 minutes at 170° C.

Specimens were taken of the panels produced and subjected to different tests, the following results being obtained for each of the composites:

| | 1 | 2 | 3 |
|---|---|---|---|
| Bending Strength (MPa) | 124 | 95,4 | 57,5 |
| Bending Modulus (MPa) | 10120 | 10310 | 6793 |
| Mean Deflection (mm) | 16 | 13 | 12 |
| Grammage (kg/m²) | 21,09 | 20,10 | 20,90 |
| Density (g/cm³) | 1,25 | 1,21 | 1,36 |
| Core-skin adhesion | GOOD | GOOD | GOOD |
| Nailing | GOOD | GOOD | GOOD |

1. Core of 60% PP + 40% rubber/single-threaded 850 g/m²/ vinyl ester SMC / polyester SMC with nanoparticles.
2. Core of 60% ABS + 40% rubber/ single-threaded 850 g/m²/ vinyl ester SMC / polyester SMC with nanoparticles.
3. Core of 70% recycled material + 30% rubber/ single-threaded 850 g/m² /Twintex / Curv.

The properties required for the composite type panels for concrete shuttering must be:
- a bending strength close to 50-60 MPa,
- a bending modulus close to 5000 MPa,
- a mean deflection less than 12 mm
- a mean grammage less than 25 kg/m²
- a density less than 1.5 g/cm³
- easily nailed, and
- good adhesion between the core and the skin.

So, as can be seen in the table above, panel 3 satisfies the objectives for the different properties as to bending strength, bending modulus, etc., as well as being easily nailed and having good adhesion between core and skin.

## Claims

1. - Composite panel for application in concrete shuttering essentially **characterized in that** it incorporates a core which contains the following components:
- recycled thermoplastic material,
- triturated recycled rubber.

2. - Composite panel for application in concrete shuttering according to claim 1 **characterized in that** the recycled thermoplastic material is recycled polypropylene.

3. - Composite panel for application in concrete shuttering according to claims 1-2, **characterized in that** the triturated recycled rubber has a grain size of 1-4 mm.

4. - Composite panel for application in concrete shuttering according to claims 1-3 **characterized in that**:
- the recycled polypropylene is in a quantity of between 80 and 20%, being preferably of 70%;
- the triturated recycled rubber with a grain size of 1-4 mm is in a quantity of between 20 and 80%, being preferably of 30%.

5. - Composite panel for application in concrete shuttering according to claim 1 **characterized in that** it incorporates a core which contains the following components:
- triturated recycled material obtained from the automobile industry which contains thermoplastic material and triturated rubber;
- recycled thermoplastic material, preferably recycled polypropylene.

6. - Composite panel for application in concrete shuttering according to claim 5 **characterized in that** the core contains:
- a triturated recycled material in a quantity of between 90 and 40%, preferably of 70%;
- polypropylene in a quantity of between 10 and 60%, preferably of 30%.

7. - Composite panel for application in concrete shuttering according to claims 1-6 **characterized in that** on at least one of the faces of the core it has a structural skin with intermediation of a filter which acts as interface.

8. - Composite panel for application in concrete shuttering according to claim 7 **characterized in that** the structural skin is constituted by reinforced polypropylene.

9. - Composite panel for application in concrete shuttering according to claim 8 **characterized in that** the structural skin has a thickness of 1 to 3 mm.

10. - Composite panel for application in concrete shuttering according to claim 7 **characterized in that** the filter is a filter of continuous threads which has a grammage of 400 to 800 g/m².

11. - Composite panel for application in concrete shuttering according to the previous claims **characterized in that** on one of the faces of the structural skin it has a finishing skin which constitutes the contact face with the concrete.

12. - Composite panel for application in concrete shuttering according to claim 11 **characterized in that** the finishing skin is constituted by polyurethane.

13. - Composite panel for application in concrete shuttering according to claim 11 **characterized in that** the finishing skin is constituted by reinforced polypropylene with bidirectional polypropylene fabric.

14. - Composite panel for application in concrete shuttering according to claim 11 **characterized in that** the finishing skin is constituted by polyethylene.

15. - Composite panel for application in concrete shuttering according to claim 11 **characterized in that** the finishing skin has a thickness of between 0.2 and 0.7 mm.

16. - Manufacturing procedure of composite panel for application in concrete shuttering in accordance with the previous claims **characterized in that** it proceeds according to the following stages:
- mixing of the thermoplastic material and of the recycled and triturated rubber constituting the core in a mixer to obtain proper uniformity,
- hot-pressing of the core, of the continuous-thread filter, of the structural skin, of the adhesive film, and of the finishing skin.

17. - Manufacturing procedure of composite panel for application in concrete shuttering in accordance with claims 1-15 **characterized in that** it proceeds according to the following stages:
- mixing of the thermoplastic material and of the recycled and triturated rubber constituting the core in a mixer to obtain proper uniformity,
- extrusion of the components of the core,
- superimposing on the core, after passing through calender rollers, of the continuous-thread filter, of the structural skin, of the adhesive film and of the finishing skin.

## Amended claims

### Amended claims under Art. 19.1 PCT

1. - Composite panel for application in concrete shuttering essentially **characterized in that** it incorporates a core which contains the following components:
- recycled polypropylene,
- triturated recycled rubber.

2. - Composite panel for application in concrete shuttering according to claim 1, **characterized in that** the triturated recycled rubber has a grain size of 1-4 mm.

3. - Composite panel for application in concrete shuttering according to claims 1 and 2 **characterized in that**:
- the recycled polypropylene is in a quantity of between 80 and 20%, being preferably of 70%;
- the triturated recycled rubber with a grain size of 1-4 mm is in a quantity of between 20 and 80%, being preferably of 30%.

4. - Composite panel for application in concrete shuttering according to claim 1 **characterized in that** it incorporates a core which contains the following components:
- triturated recycled material obtained from the automobile industry which contains thermoplastic material and triturated rubber;
- recycled thermoplastic material, preferably recycled polypropylene.

5. - Composite panel for application in concrete shuttering according to claim 4 **characterized in that** the core contains:
- a triturated recycled material in a quantity of between 90 and 40%, preferably of 70%;
- polypropylene in a quantity of between 10 and 60%, preferably of 30%.

6. - Composite panel for application in concrete shuttering according to claims 1-5 **characterized in that** on at least one of the faces of the core it has a structural skin with intermediation of a filter which acts as interface.

7. - Composite panel for application in concrete shuttering according to claim 6 **characterized in that** the structural skin is constituted by reinforced polypropylene.

8. - Composite panel for application in concrete shuttering according to claim 7 **characterized in that** the structural skin has a thickness of 1 to 3 mm.

9. - Composite panel for application in concrete shuttering according to claim 6 **characterized in that** the filter is a filter of continuous threads which has a grammage of 400 to 800 g/m².

10. - Composite panel for application in concrete shuttering according to the previous claims **characterized in that** on one of the faces of the structural skin it has a finishing skin which constitutes the contact face with the concrete.

11. - Composite panel for application in concrete shuttering according to claim 10 **characterized in that** the finishing skin is constituted by polyurethane.

12. - Composite panel for application in concrete shuttering according to claim 10 **characterized in that** the finishing skin is constituted by reinforced polypropylene with bidirectional polypropylene fabric.

13. - Composite panel for application in concrete shuttering according to claim 10 **characterized in that** the finishing skin is constituted by polyethylene.

14. - Composite panel for application in concrete shuttering according to claim 10 **characterized in that** the finishing skin has a thickness of between 0.2 and 0.7 mm.

15. - Manufacturing procedure of composite panel for application in concrete shuttering in accordance with the previous claims **characterized in that** it proceeds according to the following stages:
- mixing of the thermoplastic material and of the recycled and triturated rubber constituting the core in a mixer to obtain proper uniformity,
- hot-pressing of the core, of the continuous-thread filter, of the structural skin, of the adhesive film, and of the finishing skin.

16. - Manufacturing procedure of composite panel for application in concrete shuttering in accordance with claims 1-14 **characterized in that** it proceeds according to the following stages:
- mixing of the thermoplastic material and of the recycled and triturated rubber constituting the core in a mixer to obtain proper uniformity,
- extrusion of the components of the core,
- superimposing on the core, after passing through calender rollers, of the continuous-thread filter, of the structural skin, of the adhesive film and of the finishing skin.
